(19) Europäisches Patentamt
European Patent Office
Office européen des brevets

(11) **EP 4 425 782 A1**

(12) **EUROPEAN PATENT APPLICATION**

(43) Date of publication:
**04.09.2024 Bulletin 2024/36**

(51) International Patent Classification (IPC):
**H02N 1/08** (2006.01)

(21) Application number: **23425006.6**

(52) Cooperative Patent Classification (CPC):
**H02N 1/08**

(22) Date of filing: **01.03.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Project e Motors S.A.**
**6900 Lugano, Ticino (CH)**

(72) Inventor: **MOSCATELLI, Emilio**
**21030 Cugliate-Fabiasco**
**Varese (IT)**

(74) Representative: **Pennacchio, Salvatore Giovanni**
**Jacobacci & Partners S.p.A.**
**Via Senato, 8**
**20121 Milano (IT)**

(54) **ELECTROSTATIC ALTERNATING CURRENT GENERATOR**

(57) The invention relates to an electrostatic alternating current generator (100; 200) comprising:
- a shaft (1) movable by a motor (Mot) for rotating about an axis (Z);
- a rotor element (10; 20) fixed to the shaft and comprising at least a first (11; 21) and at least a second (12; 22) rotor electrode;
- a stator element (13; 23) fixed to a generator housing (13'; 23') unmovable with respect to the shaft; such a housing is configured to enclose the stator element, the rotor element and a portion of the shaft; the stator element comprises at least a first (14; 24) and at least a second (15; 25) stator electrode;
- a direct voltage source (3) connectable to the at least a first and at least a second stator electrode through a first (16; 26) and a second (17; 27) stator terminal;
- a first (4) and a second (5) metal connection element fixed to the shaft, the first metal element electrically connected to the at least a first rotor electrode and the second metal element electrically connected to the at least a second rotor electrode;
- a resistor (R) having a first (r1) and a second (r2) terminal electrically connected to the first and second metal connection elements, respectively, to detect a variation over time of an electric potential difference (S) applied between the at least a first and at least a second rotor electrode following the rotation of the rotor element about the axis.

Such an electrostatic generator further comprises a separation air gap (2) representative of a distance between the rotor element and the stator element unchanging during the rotation of the rotor element. During the rotation of the rotor element about the axis, each of these at least a first and at least a second rotor electrode form,

with at least one portion of the at least a first and at least a second stator electrode, two capacitors connected to each other in series via the resistor.

FIG. 1

**Description**

TECHNOLOGICAL BACKGROUND OF THE INVENTION

Field of application

The present invention generally relates to the field of alternators. In particular, the invention relates to an electrostatic alternating current generator, for example with sinusoidal trend.

Prior art

As is known, from a construction point of view, an alternator or alternating current generator consists of a rotating element or rotor, fitted onto a rotation shaft of the generator itself, and a fixed element or stator in which the rotor is moved.

Such a generator is adapted to operate by exploiting the laws of magnetic induction based on which an electro-motive force is generated on a reel of conducting wire, generally copper, associated with the stator when such a reel is immersed in a magnetic field which is variable over time, in terms of intensity and direction, following the rotation of the rotor. Such an electro-motive force E can be calculated with the formula:

$$E = B * l * v \tag{1}$$

where B represents the induction of the magnetic field produced by the rotor circuit, 1 represents the length of the active part of the stator conductor and v the peripheral speed of the rotor or even the relative speed of the stator conductor with respect to the magnetic flux produced by the rotor.

In the specific case of modern alternators, the rotor comprises permanent magnets or is made of ferromagnetic material and is provided with a plurality of excitation coils aiming to create pairs of North-South poles in a variable number according to the construction requirements. The stator, instead, consists of a laminated pack of ferromagnetic material on which slots are formed, which are configured to accommodate electrical windings. On the aforesaid electrical windings, the electromotive forces mentioned above adapted to sustain the electric current produced are induced. Such electrical windings are generally arranged on the stator to form a 90° angle with respect to the rotor axis, i.e., they are arranged perpendicularly to the flux of the magnetic field generated by the rotor.

As known to those skilled in the art, the operation of the rotor through endothermic motors, hydraulic turbines, steam or gas turbines, allows generating a voltage with an alternating sinusoidal trend in the windings of the stator as the active sides of the stator winding are "cut" by the polar magnetic field with increasing and decreasing North-South variable module. Such a voltage in turn generates, in the electrical windings (either single-phase or threephase), a current in phase therewith, which causes a braking action on the rotor according to the laws of magnetic induction.

The aforementioned alternators are currently the only systems for producing amounts of current for supplying industries, the public sector and the private sector.

However, alternators of the known type are not free from defects and limitations.

In fact, such alternators are often made using ferromagnetic materials such as iron or nickel, the use of which has a considerable effect on the total cost of the alternator and leads to the manufacture of alternators that are excessively heavy and not very efficient in many applications.

Moreover, the operation of electrostatic machines of the known type can often cause dangerous electric arc phenomena which are usually attenuated using dielectric fluids or appropriate control circuits which make the structure of the alternators more complex.

SUMMARY OF THE INVENTION

It is the object of the present invention to devise and provide an electrostatic alternating current generator, for example with a substantially sinusoidal trend which, by overcoming the drawbacks complained above with reference to alternators of the known type, is simple to produce while allowing a reduction in the weights and manufacturing costs of the generator while ensuring high efficiency of the electrostatic machine.

Such an object is achieved by an electrostatic alternating current generator according to claim 1.

Preferred embodiments of such an electrostatic alternating current generator are described in the dependent claims.

BRIEF DESCRIPTION OF THE DRAWINGS

Further features and advantages of the electrostatic alternating current generator according to the invention will become apparent from the following description of preferred embodiments, given by way of non-limiting indications, with reference to the accompanying drawings, in which:

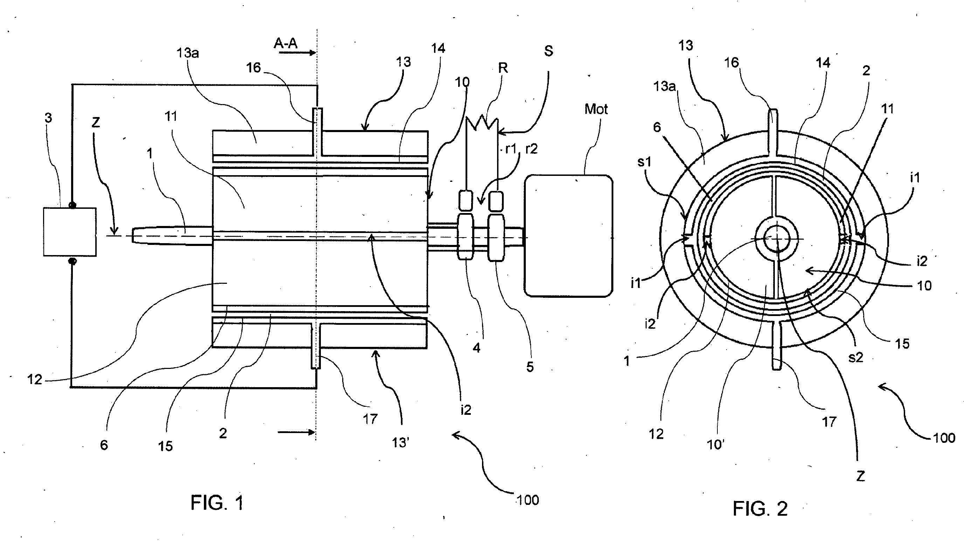

- **figure 1** illustrates a side, partially longitudinal sectional, view of a first embodiment of an electrostatic alternating current generator of the invention or drum generator, where a stator element is partially longitudinally sectioned to show an internal rotor element fitted onto a rotation shaft;
- **figure 2** illustrates a sectional view along the plane A-A of the electrostatic alternating current generator in figure 1;

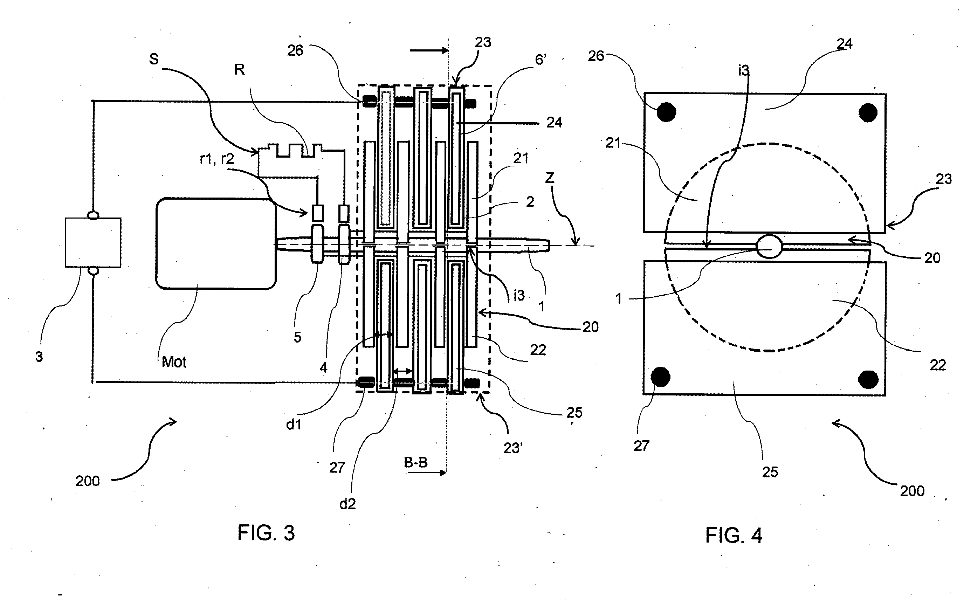

- **figure 3** illustrates a longitudinal sectional view of a second embodiment of an electrostatic alternating current generator of the invention or disc generator;
- **figure 4** illustrates a sectional view along the plane B-B of the electrostatic alternating current generator in figure 3;

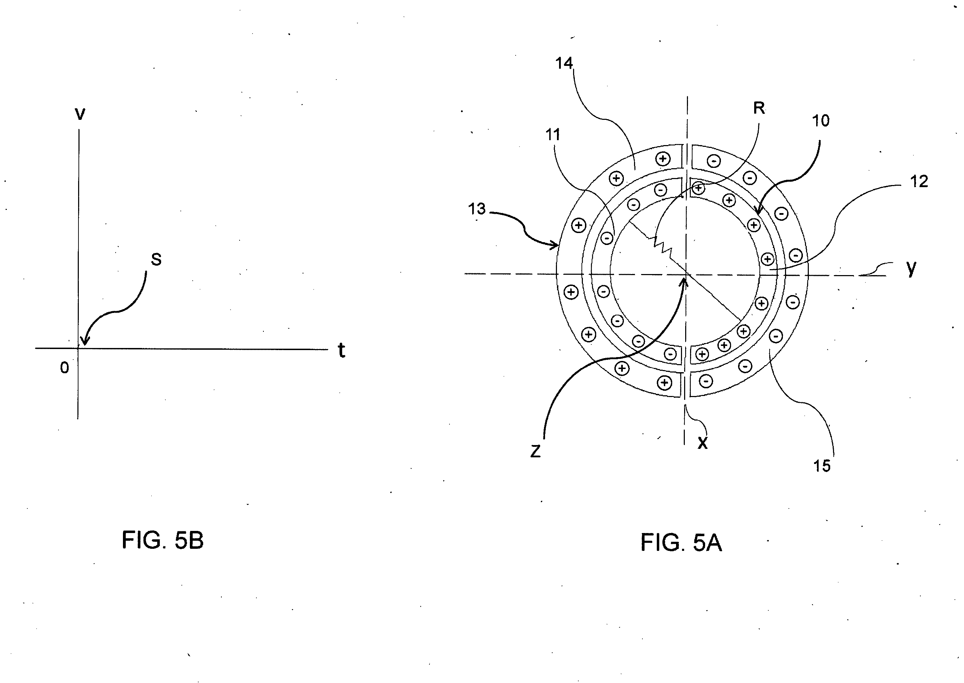

- **figures 5A-5B** illustrate, respectively, a simplified schematic view of the electrical armatures of the stator and the rotor of the electrostatic generator in figure 2 in a first position of the rotor with respect to the stator and an initial electrical voltage value present at the terminals of a resistor electrically connected between the two armatures of the rotor;

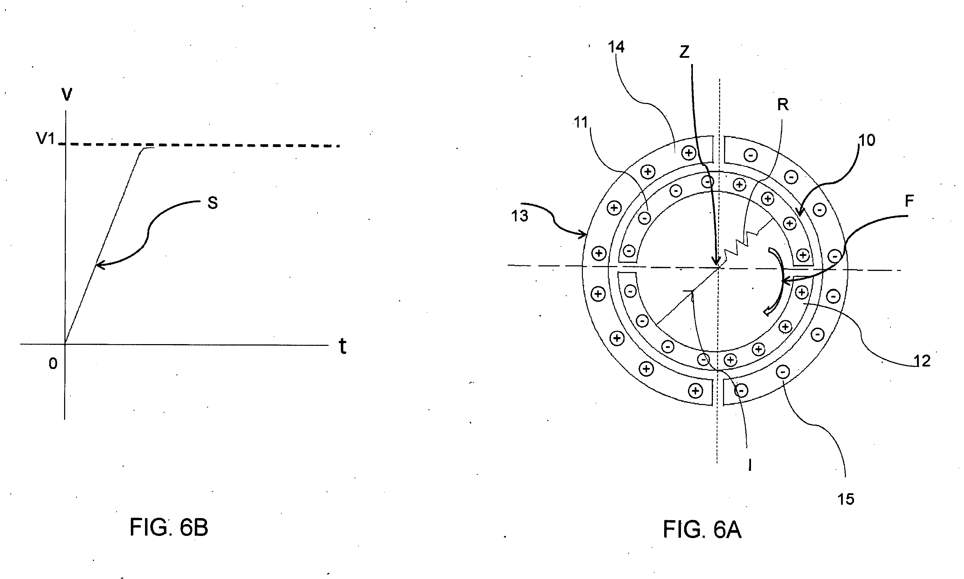

- **figures 6A-6B** illustrate, respectively, the electrical armatures of the stator and the rotor of the electrostatic generator in figure 5A in a second position taken by the rotor with respect to the stator following a rotation of the rotor from the first position to the second position, and a trend over time of the electrical voltage present at the terminals of the resistor electrically connected between the two armatures of the rotor starting from the initial voltage value;

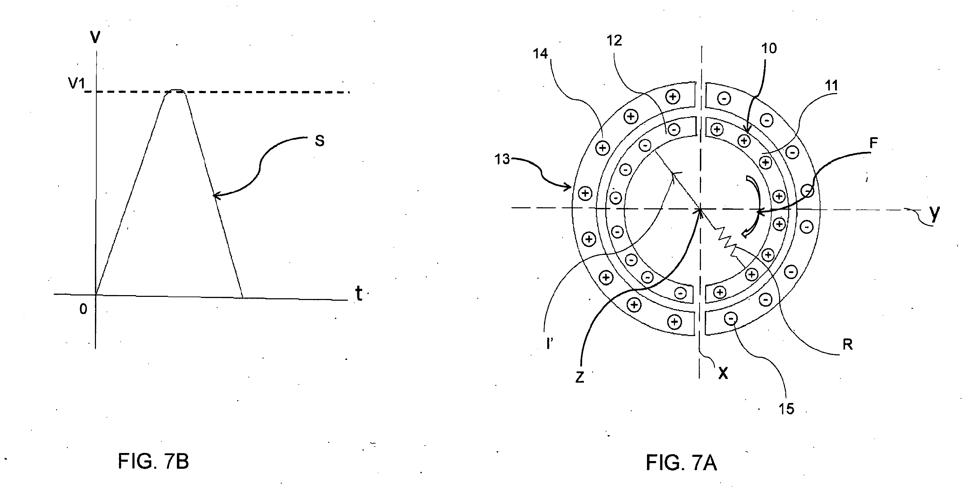

- **figures 7A-7B** illustrate, respectively, the electrical armatures of the stator and the rotor of the electrostatic generator in figure 5A in a third position taken by the rotor with respect to the stator following a further rotation of the rotor from the second position to the third position, and a trend over time of the electrical voltage present at the terminals of the resistor electrically connected between the two armatures of the rotor starting from the initial voltage value;

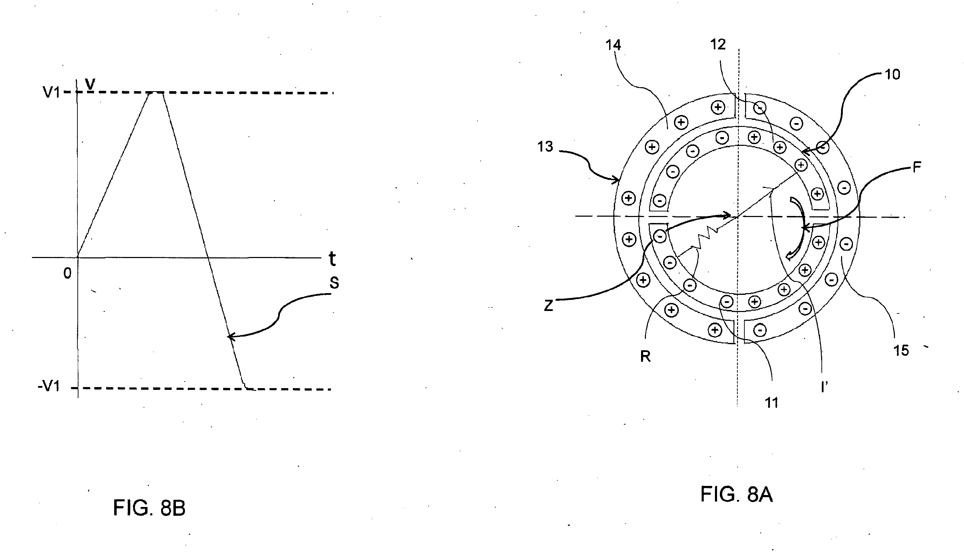

- **figures 8A-8B** illustrate, respectively, the electrical armatures of the stator and the rotor of the electrostatic generator in figure 5A in a fourth position taken by the rotor with respect to the stator following a further rotation of the rotor from the third position to the fourth position, and a trend over time of the electrical voltage present at the terminals of the resistor electrically connected between the two armatures of the rotor starting from the initial voltage value;

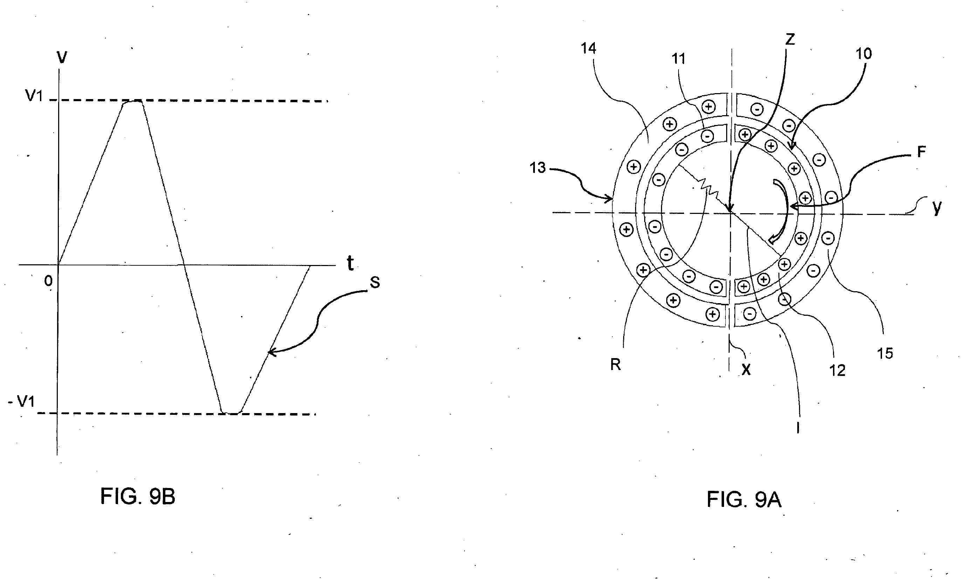

- **figures 9A-9B** illustrate, respectively, the electrical armatures of the stator and the rotor of the electrostatic generator in figure 5A in a fifth position taken by the rotor with respect to the stator following a further rotation of the rotor from the fourth position to the fifth position, and a trend over time of the electrical voltage present at the terminals of the resistor electrically connected between the two armatures of the rotor starting from the initial voltage value.

Similar or equivalent elements in the aforesaid figures are indicated by the same reference numerals.

DETAILED DESCRIPTION

With reference to the above-mentioned figures 1-4, reference numeral 100, 200 is used to indicate an electrostatic alternating current generator of the present invention as a whole, in two embodiments.

In particular, the electrostatic generator 100 in figures 1-2 is a drum generator. The electrostatic generator 200 in figures 3-4 is a disc generator. In the following, the electrostatic alternating current generator 100, 200, of the drum- or disc-type, is also referred to as a current generator or, more simply, generator.

In a general embodiment, the electrostatic alternating current generator 100, 200 comprises a shaft 1 which can be moved by a motor Mot to rotate about an axis Z or a rotation axis of the generator. For example, such a motor Mot is an endothermic motor, a hydraulic turbine, a steam or gas turbine or even an electric motor and any device capable of rotating the shaft.

The electrostatic generator 100, 200 comprises a rotor element or rotor 10, 20 fixed to such a shaft 1 and comprising at least a first 11, 21 and at least a second 12, 22 rotor electrode.

The generator 100, 200 further comprises a stator element or stator 13, 23 fixed to a generator housing 13', 23' unmovable with respect to the shaft 1. Such a housing 13', 23' is configured to enclose the stator element 13, 23, the rotor element 10, 20 and a portion of the shaft 1.

The aforesaid stator element 13, 23 comprises at least a first 14, 24 and at least a second 15, 25 stator electrode.

The electrostatic generator 100, 200 of the invention further comprises a source or generator of direct current (DC) voltage 3 which is connectable to the aforesaid at least a first 14, 24 and at least a second 15, 25 stator electrode through a first 16, 26 and a second 17, 27 stator terminal. Such a direct voltage source 3 is configured to apply a direct voltage of a preset value between these first 16, 26 and second 17, 27 stator terminals. For example, such a direct voltage can take values between a few tens of volts up to a few tens of thousands of volts.

In an embodiment of the invention, the direct voltage source 3 is connected to the at least a first 14, 24 and at least a second 15, 25 stator electrode continuously during the operation of the electrostatic generator 100, 200. In a different embodiment, such a direct voltage source 3 is connected to the at least a first 14, 24 and at least a second 15, 25 stator electrode only in an initial phase or operating start-up phase of the generator, i.e., in a predefined time duration interval.

Additionally, the generator 100, 200 comprises a first 4 and a second 5 metal connection element fixed to such a shaft 1. The first metal element 4, for example a first aluminum ring fixed to the shaft 1, is electrically connected to the at least a first rotor electrode 11, 21. The second metal element 5, for example a second aluminum ring fixed to the shaft 1, is electrically connected to the at least a second rotor electrode 12, 22.

The generator 100, 200 further comprises a resistor R having a first r1 and a second r2 terminal electrically connected to the aforesaid first 4 and second 5 metal connection elements, respectively. These first r1 and second r2 terminals are materialized in sliding electrical contacts.

The aforesaid resistor R is configured to detect a variation over time of an electric potential difference S applied between the at least a first 11, 21 and at least a second 12, 22 rotor electrode following the rotation of the rotor element 10, 20 about the axis Z.

Additionally, the electrostatic generator 100, 200 comprises a separation air gap 2, representative of a distance between the aforesaid rotor element 10, 20 and the stator element 13, 23. Such an air gap 2 represents a separation gap, for example occupied by air or another dielectric, between the rotor element 10, 20 and the stator element 13, 23. In particular, during the operation of the electrostatic generator 100, 200, in particular during the rotation of the rotor element 10, 20, the distance between the rotor element 10, 20 and the stator element 13, 23 is unchanging.

During the rotation of the rotor element 10, 20 about the axis Z, each of the aforesaid at least a first 11, 21 and at least a second 12, 22 rotor electrode form with at least one portion of said at least a first 14, 24 and at least a second 15, 25 stator electrode two capacitors connected to each other in series via the resistor R.

Moreover, in an embodiment, the electrostatic generator 100, 200 comprises a dielectric material element 6, 6' operatively associated with the separation air gap 2. The characteristics and properties of such a dielectric element shall be clarified below.

With reference to the particular embodiments in figures 1-2, the stator element 13 of the electrostatic alternating current generator 100 comprises a tubular body 13a made of dielectric material adapted to house the rotor element 10 and coaxial to the aforesaid rotor element. In particular, the at least a first 14 and at least a second 15 stator electrode are materialized in a first 14 and a second metal sheet 15, for example made of aluminum, shaped like an arc of a circle, adapted to cover an inner surface s1 of such a tubular body 13a facing the rotor element 10 and separated from each other by two first insulation interspaces i1 extending on the inner surface of the tubular body 13a of the stator element 13 parallel to the axis Z and having a length equal to the length of the tubular body 13a. The first 14 and second 15 metal sheets are arranged symmetrically with respect to the axis Z for covering the inner surface s1 of the tubular body 13a of the stator.

Moreover, the rotor element 10 comprises a cylindrical body 10' made of dielectric material fixed to the aforesaid shaft 1. In particular, the at least a first 11 and at least a second 12 rotor electrode are materialized in a third 11 and a fourth metal sheet 12, for example made of aluminum, shaped like an arc of a circle, adapted to cover an outer surface s2 of such a cylindrical body 10' facing the stator element 13. Such third 11 and fourth 12 sheets are separated from each other by two second opposing insulation interspaces i2 which extend on the outer surface of the cylindrical body 10' of the rotor element 10 parallel to the axis Z and having a length equal to the length of the cylindrical body 10'. The third 11 and the fourth metal sheet 12 are arranged symmetrically with respect to the axis Z for covering the outer surface s2 of the cylindrical body 10' of the rotor.

In an embodiment, such an element made of dielectric material 6, operatively associated with the air gap 2 of the electrostatic generator 100, comprises, or consists of, a continuous tubular layer or sheath for covering the rotor element 10.

In the embodiment in figure 2, such a tubular sheath 6 which covers the rotor element 10 extends radially from the third 11 and fourth 12 metal sheets of the rotor 10 towards the stator 13 without coming into contact with the stator 13, i.e., without internally occupying the air gap 2.

Such a continuous tubular sheath 6 which covers the rotor element 10 can extend radially from the third 11 and fourth 12 metal sheets of the rotor 10 towards the first 14 and second 15 metal sheets of the stator 13, so that the thickness of such a sheath 6 occupies a large part of the air gap 2, leaving a residual portion of the air gap having a radial dimension of a few tens of millimeters free to allow the rotation of the rotor element 10. Such a residual portion of the air gap is occupied by a dielectric fluid, generally air.

In particular, the dielectric material of the continuous tubular sheath or layer 6 for covering the rotor element 10 is selected, for example, from the group consisting of: polyvinylchloride (PVC), polyvinyl paints, glass, mica, bakelite, epoxy resins.

In a different embodiment, with reference to the voltages involved and the size of the air gap 2, the tubular sheath 6 can be absent, i.e., the air gap 2 is entirely occupied by air.

In an embodiment, the dielectric material of the cylindrical body 10' of the rotor element 10 and of the tubular body 13a of the stator element 13 is selected, for example, from the group consisting of: bakelite, one or more polymers, plexiglass, vetronite or fiberglass, mica.

In an embodiment, a minimum transverse dimension of each of the first insulation interspaces i1 between the first 14 and second 15 metal sheets and each of the second insulation interspaces i2 between the third 11 and fourth 12 metal sheets is:

- 0.033 mm, every 100 Volts, if the element made of dielectric material 6 operatively associated with the air gap 2 is air,
- 0.004 mm, every 100 Volts, if the element made of dielectric material 6 operatively associated with the air gap 2 is polyvinylchloride PVC or polyvinyl paints.

With reference to the embodiment in figures 1-2, a thickness in the radial direction of the first 14 and second 15 metal sheets and the third 11 and fourth 12 metal sheets is between some tens of microns, such as 10 microns, to some centimeters, such as 10 centimeters.

In particular, the thickness of about 10 microns can be obtained by making such metal sheets by spreading the inner surface of the tubular body 13a of the stator 13 and/or the outer surface of the cylindrical body 10' of the rotor 10 with conductive paint made of aluminum or containing aluminum.

With reference to the embodiment of the electrostatic alternating current generator 200 in figures 3-4, the rotor element 20 of the generator comprises one or more metal discs 21, 22, e.g., of aluminum, fixed to the aforesaid shaft 1, so that a first distance d1 along the rotation axis Z of each disc from an adjacent disc takes a constant preset value.

Moreover, the stator element 23 of the electrostatic generator 200 comprises one or more pairs of metal plates 24, 25, e.g., of aluminum, mutually aligned orthogonally to the rotation axis Z. These one or more pairs of plates are configured so that the plates of each pair are interposed between two adjacent discs of the rotor element 20, and so that a second distance d2 along the rotation axis Z of each pair of plates from a pair of adjacent plates takes a constant preset value.

In greater detail, this at least a first 24 and at least a second 25 stator electrode are a first 24 and a second metal plate 25 mutually aligned orthogonally to the axis Z of each of said one or more pairs of plates.

Moreover, this at least a first 21 and at least a second 22 rotor electrode are a first 21 and a second 22 metal half-disc of each of said one or more discs. Such half-discs 21, 22 are separated from each other by a respective insulation interspace i3 extending parallel to the axis Z and having a length equal to a thickness of each disc.

With reference to the example of generator 200 in figure 3, the first 4 metal connection element fixed to the shaft 1 is electrically connected to all the half-discs of the aforesaid discs of the rotor 20 extending from the shaft 1 towards the same first portion of the generator housing 23'. In a substantially symmetrical manner, the second 5 metal connection element fixed to the shaft 1 is electrically connected to all the half-discs of the aforesaid discs of the rotor 20 extending from the shaft 1 towards the same second portion of the generator housing 23'.

Still with reference to the example of generator 200 in figure 3 and the pairs of metal plates 24, 25 mutually aligned orthogonally to the rotation axis Z of the stator 23, all the first plates 24 of each pair are fixed to the first portion of the generator housing 23' and are connected to each other through the first stator terminal 26. Likewise, all the second plates 25 of each pair are fixed to the second portion of the generator housing 23' and are mutually connected through the second stator terminal 27.

In view of this, the continuous voltage source 3 is configured to apply the preset continuous voltage value simultaneously between all the first plates 24 and second plates 25 of each pair of plates.

In the embodiment of the generator 200 in figure 3, the aforesaid element made of dielectric material 6' operatively associated with the air gap 2 of the electrostatic generator comprises mutually similar covering layers configured to cover and completely incorporate the first 24 and second 25 metal plates, respectively, of each of these one or more pairs of plates of the stator element 23.

In particular, the dielectric material of the mutually similar covering layers 6' configured to cover the first 24 and second 25 metal plates, respectively, of each of said one or more pairs of plates of the stator element 23 is selected, for example, from the group consisting of: polyvinylchloride (PVC), polyvinyl paints, glass, mica, bakelite, epoxy resins.

In a different embodiment, with reference to the voltages involved and the size of the air gap 2, the covering layers 6' can be absent, i.e., the air gap 2 is entirely occupied by air.

As already recalled above, with reference to the schematic representation of the generator 100 in figure 5A, the rotor element 10 and the stator element 13 of the electrostatic generator 100 can be compared to two flat capacitors connected in series with each other by the resistor R. It should be noted that the internal armatures 11, 12 of such capacitors are associated with the electrodes of the rotor element 10 and can thus modify their position with respect to the electrodes 14, 15 of the stator element 13 which are instead fixed. Therefore, the operation of the generator 100, 200 responds to the laws of electrostatics and as for the capacitors in particular the following formula related to the capacity of capacitors is valid:

$$C = (S/d) * \varepsilon o \qquad\qquad (2)$$

where C is the capacity of the capacitor, S is the surface area of the armatures of the capacitor, d is the distance between the armatures and $\varepsilon o$ is the dielectric constant of the means interposed between the armatures themselves (dielectric or air).

In the case of figures 1-2, since the mutual distance between the rotor armatures 11, 12 and the stator ones 14, 15 is substantially kept constant and the facing surfaces of such armatures remain substantially constant except for the presence of the interspaces i1, i2, the overall capacity associated with the aforesaid armatures of the generator 100 is substantially constant. The same observation is also valid for the disc generator 200 which, as a whole, has a greater capacity than that associated with the statorrotor armatures of the generator 100.

With reference to figures 5A-5B, 6A-6B, 7A-7B, 8A-8B, 9A-9B, an example of operation of the electrostatic generator of the invention will be described below. In particular, for simplicity purposes, reference will be made to the electrostatic drum generator 100 in figures 1-2, but similar considerations are also valid for the disc generator 200 in figures 3-4.

Figure 5A illustrates a simplified schematic view of the electrical armatures 14, 15 of the stator 13 and the electrical armatures 11, 12 of the rotor 10 of the electrostatic generator 100 in figure 2 in a first position of the rotor 10 with respect to the stator 13, shown in the plane X-Y orthogonal to the rotation axis Z.

Starting from such a configuration, it is possible to connect the electrical armatures 11, 12 of the rotor 10 to each other by connecting the resistor R to the metal connection elements 4, 5 fixed onto the shaft 1 by the related sliding contacts r1, r2.

Moreover, it is possible to apply the continuous voltage of a preset value, through the source 3, between the first 16 and second 17 stator terminals. The first 14 and second 15 armatures of the stator 13 are thus charged until the potential difference between such armatures equals the preset direct voltage value applied by the source 3. Upon reaching such a charging voltage, in particular, an amount of positive electric charge is associated, for example, with the first stator armature 14 and the same amount of negative electric charge is associated with the second stator armature 15, as shown in figure 5A.

Based on the capacitive effect recalled above, a negative electric charge is induced on the first armature 11 of the rotor 10 facing the first armature 14 of the stator 13. Such a negative electric charge on the armature 11 of the rotor 10 is substantially equal, but with opposite sign, to that applied to the first armature 14 of the stator 13.

Likewise, a positive electric charge is induced on the second armature 12 of the rotor 10 facing the second armature 15 of the stator 13. Such a positive electric charge on the armature 12 of the rotor 10 is substantially equal, but with the opposite sign, to that applied to the second armature 15 of the stator 13.

It should be noted that, during such a step of charging the armatures 11, 12 of the rotor 10, a current is configured to flow on the resistor R until the armatures 11, 12 of the rotor 10 are completely charged.

Once this charging transient is complete, the potential difference S between the armatures 11, 12 of the rotor 10 is equal to zero leaving the generator 100 electrically charged. In such a condition, the potential difference signal S applied on the resistor R electrically connected between the two armatures 11, 12 of the rotor is equal to zero as shown in figure 5B.

Figure 6A illustrates a simplified schematic view of the electrical armatures 14, 15 of the stator 13 and the electrical armatures 11, 12 of the rotor 10 of the electrostatic generator 100 in figure 2 in a second position reached by the rotor 10 with respect to the stator 13 following a rotation, e.g., clockwise, about the axis Z, and indicated by the arrow F, of the rotor 10 from the first position to the second position.

During the rotation of the rotor 10 from the first to the second position, due to the effect of the action of the voltage source 3 connected to the stator 13, the amount of electric charge and the related distribution of the charges in the armatures 14, 15 of the stator remains substantially unchanged.

As for the rotor 10, still based on the capacitive effect recalled above, during the rotation of the rotor 10, the distribution of the positive and negative electric charges on the armatures 11, 12 of the rotor 10, is gradually changed, to keep in consideration the presence of charges of the same sign present on the opposing armatures 14, 15 of the stator 13.

Such a change in the distribution of electric charges during the rotation of the rotor 10 generates an electric current I on the resistor R which increases to reach a maximum value when the armatures 11, 12 of the rotor 10 reach the aforesaid second position of the rotor shown in figure 6A. In such a second position of the rotor 10, the potential difference S between the armatures 11, 12 of the rotor 10 reaches a maximum or peak value V1, as shown in figure 6B. The value of such a peak voltage V1 is dependent on the voltage applied to the armatures and, generally, it is 60% of the voltage applied to the generator 3.

Figure 7A illustrates a simplified schematic view of the electrical armatures 14, 15 of the stator 13 and the electrical armatures 11, 12 of the rotor 10 of the electrostatic generator 100 in a third position of the rotor 13 with respect to the stator 10 following a further rotation about the axis Z, for example clockwise, indicated by the arrow F, of the rotor 10 from the second position to the third position.

Also in this case, during the further rotation of the rotor 10, due to the effect of the action of the voltage source 3 connected to the stator 13, the amount of electric charge and the related distribution in the armatures 14, 15 of the stator 13 remains substantially unchanged.

As for the rotor 10, still based on the capacitive effect recalled above, during such a further rotation of the rotor 10, the distribution of the positive and negative electric charges on the armatures 11, 12 of the rotor 10, is changed again, to keep in consideration the presence of charges of the opposite sign present on the opposing armatures 14, 15 of the stator 13 once the rotor 10 has reached the third position.

Such a change in the distribution of electric charges during such a rotation of the rotor 10 generates a respective electric current I' on the resistor R, of the same intensity, but opposite direction to the current I generated in the previous step, i.e., there is an inversion of the direction of the current. Such a current I' decreases, reaching a value equal to zero, when the armatures of the rotor 10 have reached the aforesaid third position of the rotor shown in figure 7A.

Such a third position of the rotor 10 corresponds to a new balanced position of the charges present on the armatures of the rotor 10, where the potential difference S between the armatures 11, 12 of the rotor 10 decreases from the value V1 to value zero as shown in figure 7B.

Figure 8A illustrates a simplified schematic view of the electrical armatures 14, 15 of the stator 13 and the electrical armatures 11, 12 of the rotor 10 of the electrostatic generator 100 in figure 2 in a fourth position of the rotor 10 with respect to the stator 13 following a further rotation about the axis Z, for example clockwise and indicated by the arrow F, of the rotor 10 from the third position to the fourth position.

During such a further rotation, due to the effect of the action of the voltage source 3 connected to the stator 13, the amount of electric charge and the related distribution of the charges in the armatures 14, 15 of the stator 13 remains substantially unchanged.

As for the rotor 10, still based on the capacitive effect recalled above, during such a rotation of the rotor 10, the distribution of the positive and negative electric charges on the armatures 11, 12 of the rotor 10 is gradually changed, to keep in consideration the presence of charges of the same sign present on the opposing armatures 14, 15 of the stator 13.

Such a change in the distribution of electric charges during the rotation of the rotor 10 generates electric current I' on the resistor R, having the same direction as the current generated in the previous step. Such a current I' increases, reaching a maximum value (in absolute value) when the armatures 11, 12 of the rotor 10 have reached the aforesaid fourth position shown in figure 8A. In such a second position of the rotor 10, the potential difference S between the armatures 11, 12 of the rotor 10 reaches a further maximum or peak value V1, in absolute value, as shown in figure 8B.

Figure 9A illustrates a simplified schematic view of the electrical armatures 14, 15 of the stator 13 and the electrical armatures 11, 12 of the rotor 10 of the electrostatic generator 100 in a fifth position of the rotor 13 with respect to the stator 10 following a further rotation, for example clockwise, indicated by the arrow F, of the rotor 10 from the fourth position to the fifth position.

Once such a fifth position has been reached, the rotor 10 has completed a complete 360° rotation about the axis Z.

Also in this case, during the further rotation of the rotor 10, the amount of electric charge and the related distribution in the armatures 14, 15 of the stator remains substantially unchanged.

As for the rotor 10, still based on the capacitive effect recalled above, during such a further rotation of the rotor 10, the distribution of the positive and negative electric charges on the armatures 11, 12 of the rotor 10, is changed again, to keep in consideration the presence of electric charges of the opposite sign present on the opposing armatures 14, 15 of the stator 13 once the rotor has reached such a fifth position. It should be noted that such a fifth position of the rotor 10 corresponds to the balanced position in figure 5A.

Such a change in the distribution of electric charges during the rotation of the rotor 10 generates electric current I on the resistor R, having the same intensity but opposite direction to the current I' generated in the previous step. The intensity of the current I decreases (in absolute value) reaching a value of zero when the armatures 11, 12 of the rotor 10 have reached the aforesaid fifth position shown in figure 9A.

Such a fifth position of the rotor 10 thus corresponds to a new balanced position of the electric charges present on the armatures 11, 12 of the rotor 10, on the basis of which the electric potential difference S between the armatures 11, 12 of the rotor 10 decreases, in absolute value, from the aforesaid value V1 reaching a value equal to zero in the fifth position of the rotor 10, as shown in figure 9B.

Based on the above description, following the rotations of the rotor 10 produced by the motor Mot, the generator 100 is configured to provide, at the terminals of the resistor R, a voltage S with a harmonic wave, substantially a sine wave, and a related current also substantially like a sine wave, which can be transformed and used in common electricity grids for industrial or domestic uses.

It should be noted that, during the aforesaid operating steps of the electrostatic generator of the invention, the overall capacity associated with the generator 100, 200 is not changed and remains substantially constant. Moreover, the flow of electric charges between the armatures of the rotor 10 is determined by the need to keep the system balanced.

The operating parameters of the generator 100 of the invention are closely connected to the number of revolutions of the rotor 10, the capacity and the voltage of the armatures of the stator 13. Since the voltage applied to the armatures 14, 15 of the stator 13 can reach high values, in the case of application of such a solution it is required to carefully isolate the various components with the use of suitable dielectric materials, e.g., to make the dielectric element 6, 6' using dielectric materials such as those indicated above.

The electrostatic alternating current generator 100, 200 of the present invention has various advantages and achieves the preset objects.

In particular, such a generator is made using aluminum for the armatures 11, 12 of rotor 10 and those 14, 15 of stator 13. This allows making a lighter and more efficient electrostatic generator as compared to those currently known for many applications.

Moreover, since the capacity of the generator 100, 200 of the invention is substantially constant, such a generator is substantially immune to the electric arc phenomenon and has a simpler structure than known alternators as there is no need to use dielectric fluids or external control circuits.

The present invention also relates to a system for generating alternating current comprising:

- an electrostatic alternating current generator 100, 200 of the present invention, having a shaft 1 rotatable about an axis Z;
- a motor Mot connected to such a shaft 1 for operating the rotation thereof.

In order to meet contingent needs, those skilled in the art may make changes and adaptations to the embodiments of the electrostatic alternating current generator described above or may replace elements with others which are functionally equivalent, without departing from the scope of the following claims. Each of the features described above as belonging to a possible embodiment can be implemented irrespective of the other embodiments described.

**Claims**

1. An electrostatic alternating current generator (100; 200) comprising:

   - a shaft (1) movable by a motor (Mot) for rotating about an axis (Z);
   - a rotor element (10; 20) fixed to said shaft (1) and comprising at least a first (11; 21) and at least a second (12; 22) rotor electrode;
   - a stator element (13; 23) fixed to a generator housing (13'; 23') unmovable with respect to the shaft (1), said housing (13'; 23') being configured to enclose the stator element (13; 23), the rotor element (10; 20) and a portion of the shaft (1),
   said stator element (13; 23) comprising at least a first (14; 24) and at least a second (15; 25) stator electrode;
   - a direct current voltage source (3) connectable to said at least a first (14; 24) and at least a second (15; 25) stator electrode through a first (16; 26) and a second (17; 27) stator terminal for applying a direct voltage of a preset value between said first (16; 26) and second (17; 27) stator terminals;
   - a first (4) and a second (5) metal connection element fixed to said shaft (1), the first metal element (4) being electrically connected to the at least a first rotor electrode (11; 21) and the second metal element (5) being electrically connected to the at least a second rotor electrode (12; 22);
   - a resistor (R) having a first (r1) and a second (r2) terminal electrically connected to said first (4) and second (5) metal connection elements, respectively, to detect a variation over time of an electric potential difference (S) applied between said at least a first (11; 21) and at least a second (12;22) rotor electrode following the rotation of the rotor element (10; 20) about the axis (Z);
   wherein said electrostatic generator (100; 200) further comprises a separation air gap (2) representative of a distance between said rotor element (10; 20) and said stator element (13; 23) unchanging during the rotation of the rotor element (10; 20),
   during the rotation of the rotor element (10; 20) about the axis (Z), each of the aforesaid at least a first (11; 21) and at least a second (12; 22) rotor electrode forming, with at least one portion of said at least a first (14; 24) and at least a second (15; 25) stator electrode, two capacitors connected to each other in series via the resistor (R).

2. An electrostatic alternating current generator (100) according to claim 1, further comprising an element made of dielectric material (6; 6') operatively associated with said separation air gap (2).

3. An electrostatic alternating current generator (100) according to claim 1 or 2, wherein said stator element (13) comprises:
a tubular body (13a) made of dielectric material adapted to house the rotor element (10) and coaxial to said rotor element, wherein said at least a first (14) and at least a second (15) stator electrode are a first (14) and a second metal sheet (15) adapted to cover an inner surface (s1) of said tubular body (13a) facing the rotor element (10) and separated from each other by two first opposing insulation interspaces (i1) extending on the inner surface of the tubular body (13a) of the stator element parallel to said axis (Z) and having a length equal to the length of the tubular body.

4. An electrostatic alternating current generator (100) according to claim 3, wherein said rotor element (10) comprises:
a cylindrical body (10') made of dielectric material fixed to said shaft (1), wherein said at least a first (11) and at least a second (12) rotor electrode are a third (11) and a fourth (12) metal sheet adapted to cover an outer surface (s2) of said cylindrical body (10') facing the stator element (13) and separated from each other by two second opposing insulation interspaces (i2) extending on the inner surface of the cylindrical body (10') of the rotor element parallel to said axis (Z) and having a length equal to the length of said cylindrical body.

5. An electrostatic alternating current generator (100) according to any one of claims 2-4, wherein said element made of dielectric material (6) operatively associated with the air gap (2) of the electrostatic generator consists of a continuous tubular layer for covering the rotor element (10).

6. An electrostatic alternating current generator (100) according to any one of claims 3-5, wherein the dielectric material of the cylindrical body (10') of the rotor element (10) and of the tubular body (13a) of the stator element (13) is selected from the group consisting of: bakelite, one or more polymers, plexiglass, vetronite or fiberglass, mica.

7. An electrostatic alternating current generator (100) according to claim 5, wherein the dielectric material of the continuous tubular layer (6) for covering the rotor element (10) is selected from the group consisting of: polyvinylchloride (PVC), polyvinyl paints, glass, mica, bakelite, epoxy resins, air.

8. An electrostatic alternating current generator (100) according to any one of claims 3-7, wherein a minimum transverse dimension of each of the first insulation interspaces (i1) between said first (14) and second (15) metal sheets and each of the second insulation interspaces (i2) between said third (11) and fourth (12) metal sheets is:

0.033 mm, every 100 Volts if the element made of dielectric material (6) operatively associated with the air gap (2) is air,
0.004 mm, every 100 Volts, if the element made of dielectric material (6) operatively associated with the air gap (2) is polyvinylchloride (PVC) or polyvinyl paints.

9. An electrostatic alternating current generator (200) according to claim 1 or 2, wherein said rotor element (20) comprises one or more metal discs (21, 22) fixed to said shaft (1) so that a first distance (d1) along the rotation axis (Z) of each disc from an adjacent disc takes a preset constant value.

10. An electrostatic alternating current generator (200) according to claim 9, wherein said stator element (23) comprises one or more pairs of metal plates (24, 25) mutually aligned orthogonally to the rotation axis (Z), said one or more pairs of plates being configured so that the plates of each pair are interposed between two adjacent discs of the rotor element (20), and so that a second distance (d2) along the rotation axis (Z) of each pair of plates from a pair of adjacent plates takes a preset constant value.

11. An electrostatic alternating current generator (200) according to claim 10, wherein said at least a first (24) and at least a second (25) stator electrode are a first (24) and a second (25) metal plates mutually aligned orthogonally to the axis (Z) of each of said one or more pairs of plates.

12. An electrostatic alternating current generator (200) according to claim 9, wherein said at least a first (21) and at least a second (22) rotor electrode are a first (21) and a second (22) metal half-disc of each of said one or more discs, said half-discs being separated from each other by a respective insulation interspace (i3) extending parallel to said axis (Z) and having a length equal to a thickness of each disc.

**13.** An electrostatic alternating current generator (100) according to any one of claims 9-12, wherein said element made of dielectric material (6') operatively associated with the air gap (2) of the electrostatic generator (200) comprises mutually similar covering layers configured to cover and completely incorporate the first (24) and second (25) metal plates, respectively, of each of said one or more pairs of plates of the stator element (23).

**14.** An electrostatic alternating current generator (200) according to claim 13, wherein the dielectric material of the mutually similar covering layers configured to cover said first (24) and second (25) metal plates, respectively, of each of said one or more pairs of plates of the stator element (23) is selected from the group consisting of: polyvinylchloride (PVC), polyvinyl paints, air, glass, mica, bakelite, epoxy resins.

**15.** An electrostatic alternating current generator (200) according to one or more of the preceding claims, wherein:

said at least a first (11; 21) and at least a second (12; 22) rotor electrode are made of aluminum;
said at least a first (14;24) and at least a second (15; 25) stator electrode are made of aluminum.

**16.** A system for generating alternating current comprising:

- an electrostatic alternating current generator (100; 200) according to any one of claims 1-15, having a shaft (1) rotatable about an axis (Z);
- a motor (Mot) connected to said shaft (1) for moving said shaft (1).

FIG. 2

FIG. 1

**FIG. 4**

**FIG. 3**

FIG. 5A

FIG. 5B

FIG. 6A

FIG. 6B

FIG. 7A

FIG. 7B

FIG. 8B

FIG. 8A

EP 4 425 782 A1

FIG. 9B

FIG. 9A

Europäisches
Patentamt

European
Patent Office

Office européen
des brevets

# EUROPEAN SEARCH REPORT

Application Number

EP 23 42 5006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/059168 A1 (WARD ANDREW P [US]) 20 February 2020 (2020-02-20) * paragraphs [0046], [0048] – [0052], [0054], [0061], [0074] * * figures 1,2,5,17,18 * ----- | 1-16 | INV. H02N1/08 |

TECHNICAL FIELDS
SEARCHED      (IPC)

H02N

The present search report has been drawn up for all claims

| Place of search | Date of completion of the search | Examiner |
|---|---|---|
| Berlin | 1 September 2023 | Foussier, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 ..................................................................

& : member of the same patent family, corresponding
    document

EPO FORM 1503 03.82 (P04C01)

**EP 4 425 782 A1**

## ANNEX TO THE EUROPEAN SEARCH REPORT
## ON EUROPEAN PATENT APPLICATION NO.

EP 23 42 5006

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2023

| Patent document cited in search report | Publication date | Patent family member(s) | Publication date |
|---|---|---|---|
| US 2020059168 A1 | 20-02-2020 | NONE | |

For more details about this annex : see Official Journal of the European Patent Office, No. 12/82

EPO FORM P0459